(19) Europäisches Patentamt
European Patent Office
Office européen des brevets

(11) Veröffentlichungsnummer: **0 171 019**
**B1**

# (12) EUROPÄISCHE PATENTSCHRIFT

(45) Veröffentlichungstag der Patentschrift: **16.08.89**

(51) Int. Cl.⁴: **C 08 G 18/14**, C 08 G 18/18

(21) Anmeldenummer: **85109536.4**

(22) Anmeldetag: **29.07.85**

## (54) Verfahren zur Herstellung von gegebenenfalls zellförmigen Polyurethanen.

(30) Priorität: **10.08.84 DE 3429503**

(43) Veröffentlichungstag der Anmeldung:
**12.02.86 Patentblatt 86/7**

(45) Bekanntmachung des Hinweises auf die Patenterteilung:
**16.08.89 Patentblatt 89/33**

(84) Benannte Vertragsstaaten:
**BE DE FR GB IT**

(56) Entgegenhaltungen:
**US-A- 4 342 841**

(73) Patentinhaber: **BAYER AG,**
**D-5090 Leverkusen 1 Bayerwerk (DE)**

(72) Erfinder: **Rasshofer, Werner, Dr.,**
**Leopold-Gmelin-Strasse 31, D-5000 Köln 80 (DE)**
Erfinder: **Freitag, Hans-Albrecht, Dr., c/o 162 River Crest, Dr. Corapolis, PA 15108 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der vorliegenden Erfindung ist ein Verfahren zur Herstellung von Polyurethanen, insbesondere Polyurethanschaumstoffen, bei dem Dialkylaminogruppen aufweisende Ketenacetale als Katalysatoren verwendet werden.

Polyurethane mit den verschiedenartigsten physikalischen Eigenschaften werden nach dem bekannten Isocyanat-Polyadditionsverfahren aus Verbindungen mit mehreren aktiven Wasserstoffatomen, insbesondere Hydroxyl- und/oder Carboxylgruppen enthaltenden Verbindungen, und Polyisocyanaten, gegebenenfalls unter Mitverwendung von Wasser und/oder organischen Treibmitteln, Katalysatoren, Emulgatoren und anderen Zusatzstoffen seit langem in technischem Masse hergestellt (Angew. Chem. A 59 (1948), S. 257).

Dabei ist es möglich, bei geeigneter Wahl der Komponenten homogene oder zellförmige Produkte und sowohl elastische als auch starre Schaumstoffe bzw. alle zwischen diesen Extremen liegenden Varianten herzustellen. Polyurethan-Schaumstoffe werden bevorzugt durch Mischen flüssiger Komponenten hergestellt, wobei die miteinander umzusetzenden Ausgangsmaterialien entweder gleichzeitig zusammengemischt werden oder aber zunächst mit Polyolen ein NCO-Gruppen aufweisendes Voraddukt hergestellt wird, das dann verschäumt wird.

Als Katalysatoren haben sich bei der Polyurethanschaumstoff-Herstellung tertiäre Amine vor allem deshalb bewährt, weil diese befähigt sind, sowohl die Reaktion zwischen Hydroxyl- und/ oder Carboxylgruppen und den NCO-Gruppen als auch die Reaktion zwischen Wasser und den Isocyanatgruppen zu beschleunigen, wobei beim Einstufenverfahren («one shot») die nebeneinander ablaufenden Reaktionen aufeinander abgestimmt werden können.

Ausserdem finden beim Verschäumungsprozess noch zusätzliche Vernetzungsreaktionen unter Ausbildung von Allophanat-, Biuret- und Cyanuratstrukturen statt. Bei der Komplexität der Reaktionen muss einerseits durch geeignete Katalysatorwahl der synchrone Ablauf gewährleistet sein, andererseits aber dafür gesorgt werden, dass der Katalysator nicht zu früh durch Einbau in den Schaum fixiert wird oder später den hydrolytischen Abbau des fertigen Schaumes ungünstig beeinflusst. Darüber hinaus ist der Geruch vieler häufig verwendeter tertiärer Amine für den Einsatz im Schaumsektor ungünstig.

Aufgabe der vorliegenden Erfindung war es, neue verbesserte Katalysatoren für die Polyurethan-, insbesondere Polyurethanschaumstoff-Herstellung zur Verfügung zu stellen, die keinen wahrnehmbaren Amingeruch mehr aufweisen.

Gegenstand der Erfindung ist ein Verfahren zur Herstellung von gegebenenfalls geschäumten Polyurethanen durch Umsetzung von Polyisocyanaten mit mindestens zwei gegenüber Isocyanaten reaktionsfähige Wasserstoffatome aufweisende Verbindungen vom Molekulargewicht 400–10000 in Gegenwart von tertiäre Aminogruppen aufweisenden Katalysatoren und gegebenenfalls in Gegenwart von Kettenverlängerungsmitteln vom Molekulargewicht 32–400, Schaumstabilisatoren, Wasser und/oder organischen Treibmitteln sowie gegebenenfalls weiteren Hilfs- und Zusatzmitteln, dadurch gekennzeichnet, dass man als Katalysatoren Verbindungen der allgemeinen Formel

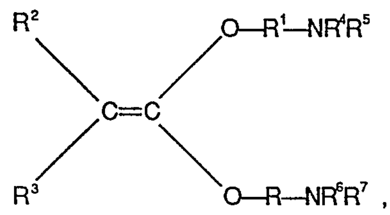

in der

R und $R^1$ gleich oder verschieden sind und zweiwertiges, gegebenenfalls verzweigtes und/ oder Ether- oder Thioether- oder Aminogruppen $-NR^8-$ enthaltendes $C_2$-$C_6$-Alkylen oder zusammen einen gegebenenfalls methyl- oder ethylsubstituierten Ethandiyliden- oder n-Propandiylidenrest,

$R^2$ und $R^3$ gleich oder verschieden sind und Wasserstoff, gegebenenfalls verzweigtes $C_1$-$C_6$-Alkyl, gegebenenfalls halogen- oder alkylsubst. Alkenyl, Alkinyl, Cycloalkyl, Aryl oder Hetaryl oder Halogen,

$R^4$-$R^7$ gleich oder verschieden sind und $C_1$-$C_{16}$-Alkyl, wobei zwei $R^4$-$R^7$-Reste zusammen einen 5–7 C-Atome aufweisenden heterocyclischen Ring bilden können und

$R^8$ $C_1$-$C_{16}$-Alkyl oder $C_5$-$C_7$-Cycloalkyl bedeuten,

verwendet werden.

Erfindungsgemäss bevorzugt sind Katalysatoren der oben genannten allgemeinen Formel, in der

R und $R^1$ $C_2$-$C_3$-Alkylen
$R^2$ und $R^3$ Wasserstoff,
$R^4$-$R^7$ $C_1$-$C_4$-Alkyl
und $R^8$ $C_1$-$C_4$-Alkyl bedeuten.

Die erfindungsgemäss zu verwendenden Katalysatoren weisen keinen wahrnehmbaren, als unangenehm empfundenen Amingeruch sowohl bei der Lagerung als auch bei der Verschäumung auf.

Vorteilhafterweise haben diese Katalysatoren nicht nur verbesserte Geruchseigenschaften, sie sind darüber hinaus in ihrer bevorzugten Ausformung in die Polyurethanmatrix einbaubar, obwohl sie keine NCO-aktiven Wasserstoffatome aufweisen. Die Fixierung des Katalysators erfolgt dabei, wie z.B. aus der US PS 4 342 841 bekannt ist, durch Harnstoffbildung.

Die erfindungsgemäss zu verwendenden Katalysatoren selbst sind an sich bekannt, vgl. dazu W.C. Kuryla und D.G. Leis, J. Org. Chem. 29, 2773 (1964); W.C. Kuryla, J. Org. Chem. 30, 3926 (1965); W. Schroth et al., Synthesis 1982, 203; 1982, 206.

Sie werden z. B. so hergestellt, dass die Dialkylaminoalkanolat-Vorstufen mit 1,1-Dichlor-1-alkenen (1,1-Dichlorethen) in die destillierbaren Dialkylaminoalkylenketenacetale umgewandelt werden:

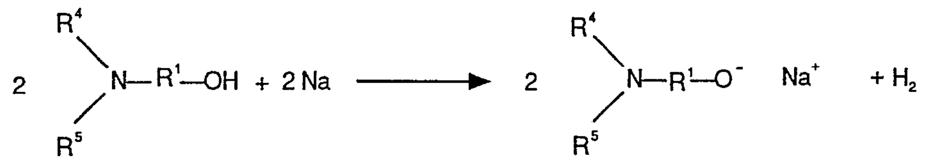

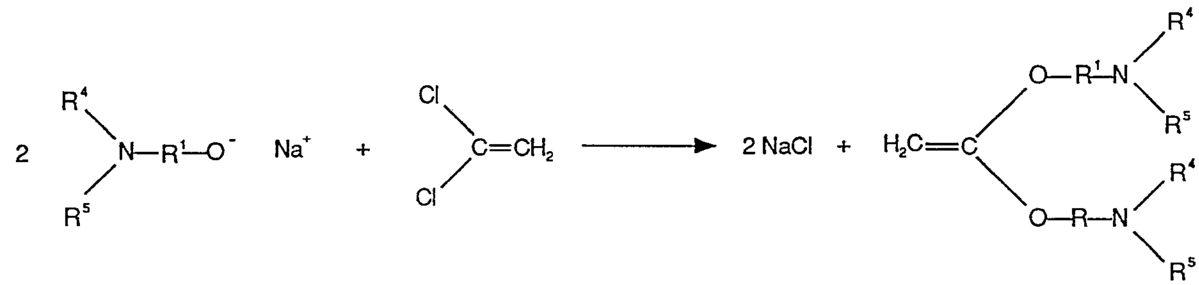

Die im Beispielteil näher aufgeführte Synthese der Verbindungen ist aber auch auf andere Weise, z. B. aus den o-Estern, möglich.

Die erfindungsgemässen Katalysatoren werden in der Regel in Mengen von 0,01-10 Gew.-Teilen, bevorzugt 0,1-5 Gew.-Teilen, besonders bevorzugt 0,5-2,5 Gew.-Teilen, bezogen auf 100 Gew.-Teile eines gegebenenfalls schäumfähigen Polyurethan-Reaktionsgemisches, eingesetzt.

Für das erfindungsgemässe Verfahren werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2,

und Q einen aliphatischen Kohlenwasserstoffrest mit 4-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen,

bedeuten, z. B. 1,4-Tetramethylen-diisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäss in Frage: Triphenylmethan-4,4',4''-triisocyanat, Polyphenyl-polymethylenpolyisocyanate, wie sie durch Anilin-Formaldehyd-Kondensation und anschliessende Phosgenierung erhalten und z. B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 250 beschrieben werden, Norbornan-Diisocyanate gemäss US-Patentschrift 3 492 330, Allophanatgruppen aufweisende Polyisocyanate, wie sie z. B. in der GB-Patentschrift 994 890, der BE-Patentschrift 761 626 und der NL-Patentschrift 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in

der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z. B. das 2,4- und 2,6-Toluylendiisocyanat sowie beliebige Gemische dieser Isomeren («TDI»), insbesondere Polyphenylpolymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisende Polyisocyanate («modifizierte Polyisocyanate»), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen von einem Molekulargewicht in der Regel von 400–10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 1500 bis 6000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäss in Frage. Vielfach sind solche Polyether bevorzugt, die überwiegend (bis zu 90 Gew.%, bezogen auf alle vorhandenen OH-Gruppen im Polyether), primäre OH-Gruppen aufweisen. Auch OH-Gruppen aufweisende Polybutadiene sind erfindungsgemäss geeignet.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

d) Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehyd-Harze sind erfindungsgemäss einsetzbar.

h) Die genannten Polyhydroxylverbindungen können vor ihrer Verwendung im Polyisocyanat-Polyadditionsverfahren noch in der verschiedensten Weise modifiziert werden: So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäss DE-Offenlegungsschrift 2 559 372 in die Polyhydroxylverbindungen Amidgruppen oder gemäss DE-Offenlegungsschrift 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Durch Umsetzung von NCO-Präpolymeren mit Hydroxylgruppen aufweisenden Enaminen, Aldiminen oder Ketiminen und anschliessende Hydrolyse erhält man gemäss DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazidgruppen werden in den DE-Offenlegungsschriften 1 694 152 (US-Patentschrift 3 625 871), 2 948 419, 3 039 600, 3 131 252 und 3 223 298 beschrieben.

i) Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984. 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für das erfindungsgemässe Verfahren geeignet. Bei Verwendung von Polyetherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-Offenlegungsschriften 2 714 291, 2 739 620

und 2 654 746) können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400-10000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/ oder Thiolgruppen und/oder Carboxylgruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glycerin, Trimethylolpropan, Hexantriol-(1,2,6), Trimethylolethan, Pentraerythrit, Chinit, Mannit und Sorbit, Rizinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Ethanolamin, Diethanolamin, N-Methyldiethanolamin, Triethanolamin und 3-Aminopropanol.

Als niedermolekulare Polyole kommen erfindungsgemäss auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 104, 2 721 186, 2 738 154 und 2 714 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäss als Polyolkomponente in Betracht (DE-Offenlegungsschrift 2 638 759).

Erfindungsgemäss geeignete aliphatische Diamine sind beispielsweise Ethylendiamin, 1,4-Tetramethylendiamin, 1,11-Undecamethylendiamin, 1,12-Dodecamethylendiamin sowie de ren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazidoalkylencarbazinester wie z.B. 2-Semicarbazidoethyl-carbazinester (DE-Offenlegungsschrift 1 918 504) oder auch Amino-semicarbazid-Verbindungen wie z.B. β-Aminoethyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589

beschriebenen estergruppenhaltigen Diamine, die Ethergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diaminodiphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäss DE-Offenlegungsschrift 2 734 574.

Als Kettenverlängerungsmittel können erfindungsgemäss auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether.

4. Als weitere erfindungsgemäss geeignete niedermolekulare Polyole vom Molekulargewicht bis 400 Esterdiole der allgemeinen Formel

$HO-(CH_2)_x-CO-O-(CH_2)_y-OH$ und
$HO-(CH_2)_x-O-CO-R-CO-O-(CH_2)_x-OH$

in denen
R einen Alkylenrest mit 1–10, vorzugsweise 2–6, C-Atomen bzw. einen Cycloalkylen- oder Arylenrest mit 6–10 C-Atomen

x = 2–6 und
y = 3–5

bedeuten,
z.B.
δ-Hydroxybutyl-ε-hydroxy-capronsäureester,
ω-Hydroxyhexyl-γ-hydroxybuttersäureester,
Adipinsäure-bis(β-hydroxyethyl)ester und
Terephthalsäure-bis(β-hydroxyethyl)ester;
Diolurethane der allgemeinen Formel

$HO-(CH_2)_x-O-CO-NH-R'-NH-CO-O-(CH_2)_x-OH$

in der
R' einen Alkylenrest mit 2–15, vorzugsweise 2–6, C-Atomen oder einen Cycloalkylen- oder Arylenrest mit 6–15 C-Atomen und

x eine Zahl zwischen 2 und 6
darstellen,
z.B. 1,6-Hexamethyl-bis(β-hydroxyethylurethan) oder 4,4'-Diphenylmethan-bis(δ-hydroxybutylurethan);
sowie Diolharnstoffe der allgemeinen Formel

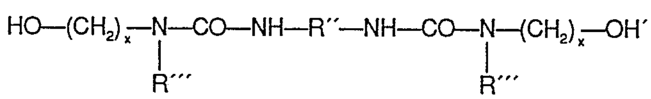

in der
R'' einen Alkylenrest mit 2–15, vorzugsweise 2–9, C-Atomen oder einen Cycloalkylen- oder Arylenrest mit 6–15 C-Atomen,
R''' Wasserstoff oder eine Methylgruppe und
x die Zahlen 2 oder 3
bedeuten,
z.B. 4,4'-Diphenylmethan-bis-(β-hydroxyethylharnstoff) oder die Verbindung

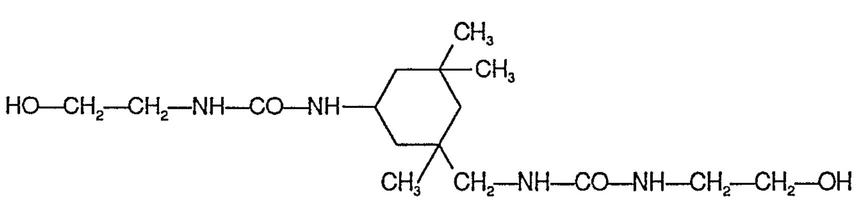

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

5. Gegebenenfalls als Hilfs- und Zusatzmittel:
a) Wasser und/oder leicht flüchtige organische Substanzen als Treibmittel. Als organische Treibmittel kommen z.B. Aceton, Ethylacetat, halogensubstituierte Alkane wie Methylenchlorid, Chloroform, Ethylidenchlorid, Vinylidenchlorid,

Monofluortrichlormethan, Chlordifluormethan, Dichlordifluormethan, ferner Butan, Hexan, Heptan oder Diethylether, in Frage. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Oberflächenaktive Zusatzstoffe, wie Emulgatoren und Schaumstabilisatoren. Als Emulgatoren kommen z. B. die Natriumsalze von Rizinusölsulfonaten oder Salze von Fettsäuren mit Aminen in Frage. Auch Alkali- oder Ammoniumsalze von Sulfonsäuren wie etwa von Dodecylbenzolsulfonsäure oder Dinaphtylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

c) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Weitere Beispiele von gegebenenfalls erfindungsgemäss mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Durchführung des erfindungsgemässen Verfahrens:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z. B solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäss die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, dass das Formteil an seiner Oberfläche Zellstruktur aufweist, sie kann aber auch so durchgeführt werden, dass das Formteil eine kompakte Haut und einen zelligen Kern aufweist. Erfindungsgemäss kann man in diesem Zusammenhang so vorgehen, dass man in die Form so viel schäumfähiges Reaktionsgemisch einträgt, dass der gebildete Schaumstoff die Form gerade ausfüllt. Man kann aber auch so arbeiten, dass man mehr schäumfähiges Reaktionsgemisch in die Form einträgt, als zur Ausfüllung des Forminneren mit Schaumstoff notwendig ist. Im letztgenannten Fall wird somit unter «overcharging» gearbeitet; eine derartige Verfahrensweise ist z. B. aus den US-Patentschriften 3 178 490 und 3 182 104 bekannt.

Bei der Formverschäumung werden vielfach an sich bekannte «äussere Trennmittel», wie Siliconöle, mitverwendet. Man kann aber auch sogenannte «innere Trennmittel», gegebenenfalls im Gemisch mit äusseren Trennmitteln, verwenden, wie sie z. B. aus den DE-Offenlegungsschriften 2 121 670 und 2 307 589 bekanntgeworden sind.

Erfindungsgemäss lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die nach der Erfindung erhältlichen Produkte finden z. B. folgende Anwendung: Als Wärme- oder Kältedämmittel, Matratzen, im Möbelbau, in der Automobilindustrie, als synthetische Elastomere z. B. in der Schuhindustrie.

## Beispiele

1. Eine Mischung aus 250 g Xylol (getrocknet und 1 × destilliert) und 1 mol des betr. Dialkylaminoalkanols werden vorgelegt, das Gemisch unter Rühren und Überleiten von Schutzgas auf 100–130°C erhitzt und bei dieser Temperatur innerhalb 8 h mit 1 Grammatom Natrium-Metall stückchenweise versetzt. Nach weiteren 8 h wird nochmals 0,1 mol Dialkylaminoalkanol zugegeben und weitere 8–24 h refluxiert. Das ausgefallene Natriumchlorid wird nach dem Erkalten abgesaugt, mit etwas Ether nachgewaschen, Filtrat und Waschflüssigkeit vereinigt und dann Xylol und Ether bei 100°C/16 Torr (21 mbar) abdestilliert. Die verbliebenen braun-flüssigen Rückstände werden im Hochvakuum aufdestilliert. Nach geringen Mengen eines niedrig siedenden Vorlaufs erscheint als 2. Fraktion das gewünschte Produkt. Es hinterbleibt eine grosse Menge eines festen, schwarzen Rückstandes.

Keten-(bis-[N,N-dimethylaminoethyl]-acetal) (I. aus 1,1-Dichlorethen und Dimethylaminoethanol)
Ausbeute: 33,2%; Sdp. 70–74°C/0,08; GC: 97,9%
Analysen: $C_{10}H_{20}N_2O_2$, 202,
ber. C: 59,4, H: 10,9, N: 13,9;
gef. C: 59,0, H: 9.8, N: 13,9,
$^1$H-NMR: 3,15 (s, $=CH_2$),
alle NMR-Daten in ppm (-Skala) ($d_6$-DMSO)
$^{13}$C-NMR: 56,8 (t, $=CH_2$), 164,6 (s, O–C–O) (nicht entkoppeltes Spektrum)

Keten-(bis-[N,N-diethylaminoethyl]-acetal) (II. aus 1,1-Dichlorethen und Diethylaminoethanol)
Ausbeute: 57,4%; Sdp. 98–100 °C/0,07; GC: 98,0%
Analysen: $C_{12}H_{30}N_2O_2$, 258,
ber. C: 65,1, H: 11,6, N: 10,9;
gef. C: 63,9, H: 11,7, N: 11,2
$^1$H-NMR: 3,09 (s, $=CH_2$) ($d_6$-DMSO)

Keten-(bis-[2-(N,N-dimethylaminoethoxy)-ethyl]-acetal) (III. aus 1,1-Dichlorethen und Dimethylaminoethoxyethanol)
Ausbeute: 23%; Sdp. 120–127 °C/0,07; GC: 94,0%
Analysen: $C_{14}H_{30}N_2O_2$, 290,
ber. C: 57,9, H: 10,3, N: 9,7;
gef. C: 57,9, H: 9,1, N: 10,1
$^1$H-NMR: 3,1 (s, $=CH_2$), ($d_6$-DMSO)

Keten- (bis-[N,N-dimethylamino-1-methylethyl]-acetal) (IV. aus 1,1-Dichlorethen und Dimenthylaminoisopropanol)
Ausbeute: 12,6%; Sdp. 72 °C/0,1; GC 81%
Analysen: $C_{12}H_{26}N_2O_2$, 230,
ber. C: 62,6, H: 11,3, N: 12,2;
gef. C: 61,7, H: 10,2, N: 12,4
$^1$H-NMR: 3,24 (s, $=CH_2$), ($d_6$-DMSO)

Keten-(bis-[N,N-dimethylaminopropyl]-acetal) (V. aus 1,1-Dichlorethen und Dimethylaminopropanol)
Ausbeute: 43,5%, Sdp. 108–110 °C/0,5, GC: 94,4%
Analysen: $C_{12}H_{26}N_2C_2$, 230,
ber. C: 62,6, H: 11,3, N: 12,2;
gef. C: 62,4, H: 10,9, N: 12,2
$^1$H-NMR: 3,08 (s, $=CH_2$), ($d_6$-DMSO).

2. Anwendungsbeispiele

a) Reaktivitätsvergleich der erfindungsgemäss zu verwendenden Katalysatoren mit einem handelsüblichen Katalysator.

Ein Polyurethanschaumstoff wurde in an sich bekannter Weise durch rasches Vermischen der nachstehend aufgeführten Komponenten hergestellt:

| | Gew.-Teile | | | | |
|---|---|---|---|---|---|
| Trifunktioneller Polyether*) OHZ 28 | 100 | 100 | 100 | 100 | 100 |
| Wasser | 3,1 | 3,1 | 3,1 | 3,1 | 3,1 |
| Stabilisator KS 43 (Handelsprodukt, Bayer AG) | 1,0 | 1,0 | 1,0 | 1,0 | 1,0 |
| Katalysator WF 17 (Handelsprodukt, Bayer AG) | 0,5 | | | | |
| Katalysator I | | 0,5 | | | |
| Katalysator II | | | 0,5 | | |
| Katalysator IV | | | | 0,5 | |
| Katalysator V | | | | | 0,5 |
| TDI 65[a]) | 80 | 80 | 80 | 80 | 80 |
| Rohes MDI | 20 | 20 | 20 | 20 | 20 |
| Liegezeit (s) | 23 | 16 | 32 | 27 | 24 |

[a]) Gemisch aus 65 Gew.-% 2,4- und 35 Gew.-% 2,6-Diisocyanatotoluol
*) hergestellt durch Addition von 83 Gew.-% Propylenoxid und anschliessend 17 Gew.-% Ethylenoxid an Trimethylolpropan

b) Austestung der erfindungsgemässen einzusetzenden Katalysatoren im Weichschaum

| Rezepturen | | 1a | 1b | 1c | 2a | 2b | 2c | 3a | 3b | 3c |
|---|---|---|---|---|---|---|---|---|---|---|
| Polyether*), OHZ 28 | Gew.-Teile | 100 | 100 | 100 | | | | | | |
| Polyether, OHZ 28 (gemäss 2a) | Gew.-Teile | | | | 100 | 100 | 100 | | | |
| Polyether**), OHZ 28 | Gew.-Teile | | | | | | | 100 | 100 | 100 |
| Wasser | Gew.-Teile | 3,1 | 3,1 | 3,1 | 2,6 | 2,6 | 2,6 | 3,1 | 3,1 | 3,1 |
| Amin-Katalysator [1]) | Gew.-Teile | 0,1 | 0,1 | 0,1 | 0,1 | 0,1 | 0,1 | 0,1 | 0,1 | 0,1 |
| Amin-Katalysator [2]) | Gew.-Teile | 0,4 | 0,4 | 0,4 | 0,1 | 0,1 | 0,1 | 0,2 | 0,2 | 0,2 |
| Bis-dimethylamino-propylformamid | Gew.-Teile | 0,5 | | | | | | | | |
| Dimethylethanolamin | Gew.-Teile | | | | 0,6 | | | | | |
| Triethanolamin | Gew.-Teile | | | | | | | 0,2 | | |
| Katalysator I | Gew.-Teile | | 0,5 | | | 0,6 | | | 0,35 | |
| Katalysator V | Gew.-Teile | | | 0,6 | | | 0,7 | | | 0,45 |
| PU-Vernetzer 56 [3]) | Gew.-Teile | | | | 0,6 | 0,6 | 0,6 | | | |
| Stabilisator KS 43 [4]) | Gew.-Teile | 1,0 | | | 0,75 | 0,75 | 0,75 | 0,75 | 0,75 | 0,75 |
| Dibutylzinndilaurat | Gew.-Teile | 0,01 | 0,01 | 0,01 | | | | | | |
| TDI 80 | | | | | 80 | 80 | 80 | | | |
| TDI 65 | | 70 | 70 | 70 | | | | 70 | 70 | 70 |
| Rohes MDI | | 30 | 30 | 30 | 20 | 20 | 20 | 30 | 30 | 30 |
| Index | | 100 | 100 | 100 | 100 | 100 | 100 | 100 | 100 | 100 |
| Liegezeit, s | | 5 | 5 | 5 | 4 | 5 | 5 | 5 | 5 | 5 |
| Abbindezeit, s | | 51 | 55 | 54 | 55 | 65 | 80 | 64 | 68 | 70 |
| Steigzeit, s | | 80 | 85 | 90 | 88 | 100 | 120 | 96 | 104 | 110 |
| Rohdichte, kg/m³, DIN 53420 | | 38 | 37 | 38 | 45 | 46 | 47 | 41 | 41 | 41 |
| Stauchhärte, KPa, DIN 53577, $\varepsilon = 40\%$ | | 1,9 | 1,7 | 1,8 | 2,4 | 2,9 | 2,7 | 2,7 | 3,1 | 2,6 |
| Zugfestigkeit, KPa, DIN 53571 | | 85 | 80 | 80 | 80 | 80 | 80 | 50 | 50 | 50 |
| Bruchdehnung, %, DIN 53571 | | 180 | 185 | 185 | 155 | 145 | 140 | 85 | 85 | 75 |
| Druckverformungsrest, %, DIN 53572, $\varepsilon = 50\%$, 70°C, 24 h | | 6,9 | 7,4 | 7,7 | 5,1 | 4,1 | 5,1 | 3,5 | 3,9 | 3,7 |

[1]) Bis-dimethylaminoethylether; [2]) Triethylendiamin (33% in Dipropylenglykol); [3]) Handelsprodukt der Bayer AG; [4]) Silicon-Stabilisator, Handelsprodukt der Bayer AG

*) Hergestellt durch Addition von 87 Gew.-% Propylenoxid und anschliessend 13 Gew.-% Ethylenoxid an Trimethylolpropan

**) Hergestellt durch Addition von 83 Gew.-% Propylenoxid und 17 Gew.-% Ethylenoxid an Sorbit

**Patentansprüche**

1. Verfahren zur Herstellung von gegebenenfalls geschäumten Polyurethanen durch Umsetzung von Polyisocyanaten mit mindestens zwei gegenüber Isocyanaten reaktionsfähige Wasserstoffatome aufweisenden Verbindungen vom Molekulargewicht 400–10000 in Gegenwart von tertiäre Aminogruppen aufweisenden Katalysatoren und gegebenenfalls in Gegenwart von Kettenverlängerungsmitteln vom Molekulargewicht 32–400, Schaumstabilisatoren, Wasser und/oder organischen Treibmitteln sowie gegebenenfalls weiteren Hilfs- und Zusatzmitteln, dadurch gekennzeichnet, dass man als Katalysatoren Verbindungen der allgemeinen Formel

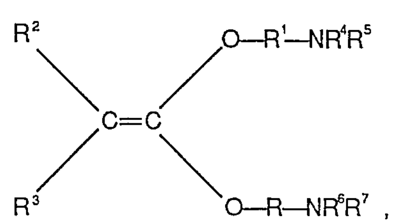
,

in der
R und $R^1$ gleich oder verschieden sind und zweiwertiges, gegebenenfalls verzweigtes und/oder Ether- oder Thioether- oder Aminogruppen $-NR^8-$ enthaltendes $C_2$-$C_6$-Alkylen oder zusammen einen gegebenenfalls methyl- oder ethylsubstituierten Ethandiyliden- oder n-Propandiylidenrest,
$R^2$ und $R^3$ gleich oder verschieden sind und Wasserstoff, gegebenenfalls verzweigtes $C_1$-$C_6$-Alkyl, gegebenenfalls halogen- oder alkylsubstituiertes Alkenyl, Alkinyl, Cycloalkyl, Aryl oder Hetaryl oder Halogen,
$R^4$-$R^7$ gleich oder verschieden sind und $C_1$-$C_{16}$-Alkyl bedeuten, wobei zwei $R^4$-$R^7$-Reste zusammen einen 5-7 C-Atome aufweisenden heterocyclischen Ring bilden können, $C_1$-$C_{16}$-Alkyl oder $C_5$-$C_7$-Cycloalkyl bedeuten,
verwendet werden.

2. Verfahren gemäss Anspruch 1, dadurch gekennzeichnet, dass in der allgemeinen Formel
$R^2$ und $R^3$ Wasserstoff, R und $R^1$ $C_2$-$C_3$-Alkylen,
$R^4$-$R^7$ $C_1$-$C_4$-Alkyl und
$R^8$ $C_1$-$C_4$-Alkyl bedeuten.

**Revendications**

1. Procédé de production de polyuréthannes éventuellement sous forme de mousse par réaction de polyisocyanates avec des composés de poids moléculaire égal à 400-10000, présentant au moins deux atomes d'hydrogène aptes à réagir vis-à-vis d'isocyanates, en présence de catalyseurs portant des groupes amino tertiaires et, le cas échéant, en présence d'agents d'allongement de chaîne d'un poids moléculaire de 32 à 400, d'agents de stabilisation de mousse, d'eau et/ou d'agents porogènes organiques ainsi que, le cas échéant, d'autre adjuvants et additifs, caractérisé en ce qu'on utilise comme catalyseurs des composés de formule générale

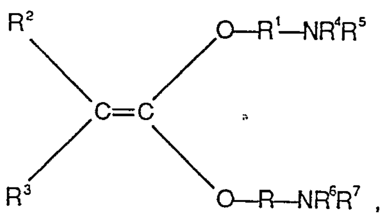

dans laquelle
R et $R^1$ sont identiques ou différents et désignent un groupe alkylène en $C_2$ à $C_6$ divalent éventuellement ramifié et/ou contenant des groupes éther ou thioéther ou amino $-NR_8-$ ou forment conjointement un reste éthane-diylidène ou n-propane-diylidène portant éventuellement des substituants méthyle ou éthyle,
$R^2$ et $R^3$ sont identiques ou différents et désignent l'hydrogène, un groupe alkyle en $C_1$ à $C_6$ éventuellement ramifié, un groupe alcényle, alcynyle, cycloalkyle, aryle ou hétaryle portant éventuellement des substituants halogéno ou alkyle ou un halogène,
$R^4$ à $R^7$ sont identiques ou différents et désignent un groupe alkyle en $C_1$ à $C_{16}$, deux restes $R^4$-$R^7$ pouvant former conjointement un noyau hétérocyclique de 5 à 7 atomes de carbone,
$R^8$ est un reste alkyle en $C_1$ à $C_{16}$ ou un reste cycloalkyle en $C_5$ à $C_7$.

2. Procédé suivant la revendication 1, caractérisé en ce que, dans la formule générale, $R^2$ et $R^3$ représentent l'hydrogène, R et $R^1$ sont des groupes alkylène en $C_2$ ou $C_3$, $R^4$ à $R^7$ sont des groupes alkyle en $C_1$ à $C_4$ et $R^8$ est un groupe alkyle en $C_1$ à $C_4$.

**Claims**

1. Process for the production of optionally foamed polyurethanes by reaction of polyisocyanates with compounds containing at least two isocyanate-reactive hydrogen atoms and having a molecular weight of 400 to 10,000 in the presence of catalysts containing tertiary amino groups and optionally in the presence of chain-extending agents having a molecular weight of 32 to 400, foam stabilizers, water and/or organic blowing agents and, optionally, other auxiliaries and additives, characterized in that the catalysts used are compounds corresponding to the following general formula

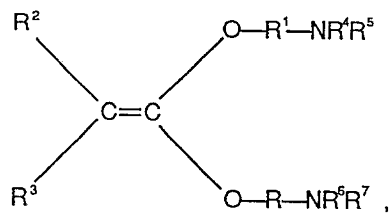

in which
R and $R^1$ may be the same or different and represent a difunctional $C_{2-6}$ alkylene radical which may optionally be branched and/or may contain ether or thioether or amino groups $-NR^8$ or, together, represent an optionally methyl- or ethyl-substituted ethanediylidene or n-propanediylidene radical,
$R^2$ and $R^3$ may be the same or different and represent hydrogen, optionally branched $C_{1-6}$ alkyl, optionally halogen- or alkyl-substituted alkenyl, alkynyl, cycloalkyl, aryl or hetaryl or halogen,
$R^4$ to $R^7$ may be the same or different and represent $C_{1-16}$ alkyl two of the substituents $R^4$ to $R^7$ together being capable of forming a heterocyclic ring containing 5 to 7 C atoms,
$R^8$ represents $C_{1-16}$ alkyl or $C_{5-7}$ cycloalkyl.

2. A process as claimed in claim 1, characterized in that, in the general formula, $R^2$ and $R^3$ represent hydrogen, R and $R^1$ represent $C_{2-3}$ alkylene, $R^4$ to $R^7$ represents $C_{1-4}$ alkyl and $R^8$ represents $C_{1-4}$ alkyl.